# EUROPEAN PATENT APPLICATION

(11) **EP 3 203 123 A1**
(43) Date of publication of application: **09.08.2017**
(21) Application number: 16153762.6
(22) Date of filing: 02.02.2016
(51) Int. Cl.: F16K 1/52, F24D 19/10

(54) **VALVE, IN PARTICULAR HEAT EXCHANGER VALVE**

(71) Applicant: Danfoss A/S, 6430 Nordborg (DK)
(72) Inventor: Sigurdsson, Haraldur, 8240 Risskov (DK); Hølck, Poul, 8300 Odder (DK)
(74) Representative: Knoblauch, Andreas

(57) **Abstract**

A valve (1), in particular a heat exchanger valve, is described comprising a housing having a first port (3), a second port (4) and a flow path between said first port (3) and said second port (4), wherein a valve seat (6) having a central axis (10), a main valve element (5) and a dynamic unit (8) are arranged in said flow path, wherein said dynamic unit (8) comprises a dynamic valve element (9) and a counter element (11).

A maximum flow through this valve should be simply adjustable.

To this end said counter element (11) comprises an adjustable form.

## Description

The present invention relates to a valve, in particular a heat exchanger valve, comprising a housing having a first port, a second port and a flow path between said first port and said second port, wherein a valve seat having a central axis, a main valve element and dynamic unit are arranged in said flow path, wherein said dynamic unit comprises a dynamic valve element and a counter element.

The present invention is illustrated with help of a radiator valve which is an example for a valve and more specifically an example for a heat exchanger valve. However, the invention is not limited to a heat exchanger valve.

The dynamic unit is a kind of maximum flow limiter which secures a maximum flow over the valve and this maximum flow is inlet pressure independent. To this end an inlet pressure is trying to close the dynamic unit against a spring, and the pressure working between the dynamic unit and the main valve formed by the valve element and the valve seat is trying to open the dynamic unit. "Closing" and "opening" of the dynamic unit means that the dynamic unit more or less throttles the flow.

When a number of such valves is used in a system, it is in some cases necessary to define the maximum flow through each of the valves, i.e. the flow in a condition in which the respective valve is fully open.

The object underlying the invention is to have a simple way to adjust the maximum flow through the valve.

This object is solved with a valve as described at the outset in that said counter element comprises an adjustable form.

In the dynamic unit the dynamic valve element cooperates with the counter element. The dynamic valve element is loaded by a pressure at the inlet of the valve (or any other pressure upstream said dynamic unit) and by a force generated by restoring means, for example spring means. When the pressure increases the dynamic valve element is displaced in a direction to increase the throttling resistance of the dynamic unit. Usually this is done by displacing or moving the dynamic valve element closer to the counter element. When the form or geometry of the counter element is changed, the same displacement of the dynamic valve element causes different changes in the throttling resistance of the dynamic unit. In other words, the characteristic curve of the dynamic unit is changed, when the form of the counter element is changed.

Preferably said counter element comprises a wall section having a radially inner surface, wherein a distance between said inner surface and said axis is adjustable for at least a part of said wall section. When the inner surface of the wall section is of circular form or almost circular form, the diameter of this circular form is at least partly changed. When the diameter is decreased, the flow resistance of the dynamic unit for a given position of the dynamic valve element is increased.

In a preferred embodiment said wall section comprises a predetermined number of wings distributed in circumferential direction around said axis, wherein an inclination of at least one wing relative to said axis is adjustable. When the inclination of such a wing is changed, one end of the wing in a direction parallel to said axis is moved radially inwardly to reduce the distance between the inner surface and the axis. This is a simple way to reduce this distance. When the inclination is changed in the opposite direction, the distance is increased and the flow resistance is decreased.

In a preferred embodiment said wing comprises an edge resting against a part of said housing which is inclined with respect to said axis, wherein said wing is displaceable parallel to said axis. When the wing is displaced parallel to the axis, the edge has to follow the inclined housing part, i.e. a slanted surface at the inner side of the housing. In this way the edge is, for example, forced to move radially inwardly or, when the wing is moved in the other direction, to move radially outwardly. When the edge is moved radially, the inclination of the wing is changed.

In a preferred embodiment said housing comprises an inner thread and said wing comprises part of an outer thread in engagement with said inner thread, wherein said wing is moveable in rotational direction around said axis. The inner thread and the outer thread form a sort of gear transferring a rotational movement, i.e. a movement in rotational direction around said axis, into a displacement parallel to said axis. The transmission ratio of this gear is rather low. When, for example, the wing is rotated by 360°, the wing is displaced parallel to the axis by only a few millimeters. This allows for a very fine and precise adjustment of the position of the wing in a direction parallel to the axis. However, another gear transmission ratio is possible.

Preferably an elastic material is located in circumferential direction between wings. When at least one wing is tiltable or has another possibility to change its inclination, there is a gap in circumferential direction between neighboring wings. This gap can be filled with an elastic material. This elastic material can have two functions. One function is to spread apart neighboring wings in circumferential direction so that the diameter of the inner surface is increased when the wing is threaded out. Another function can be that the elastic material closes the inner surface in circumferential direction so that the complete flow has to pass between the dynamic valve element and the counter element without having the possibility to pass the mentioned gap or gaps.

In a preferred embodiment said valve seat is formed at a valve seat member, said valve seat member being rotatably mounted in said housing and said wing being rotatably fixed by connected to said valve seat member. The rotational movement of the wing can be achieved by rotating the valve seat member. The valve seat member can be driven from the outside, for example by means of a valve insert.

Preferably said dynamic valve element comprises a ring shaped wall protruding into said wall section. The flow has to pass a gap between the ring shaped wall and the wall section.

Preferably said wall comprises at least one opening. This opening can enhance the control characteristic of the dynamic unit.

Preferably said opening has width in circumferential direction varying along said axis. Said opening can have, for example, a large width at an end facing the valve seat member and a small width at the other end. The specific form defines the characteristics of the dynamic valve unit.

Preferably said dynamic valve element is loaded by spring means comprising a first spring at a first side of said dynamic valve element and a second spring at a second side of said valve element opposite said first side. The two springs together act on said dynamic valve element. The valve element assumes a position in which the force generated by the combined action of the two springs and of the force generated by the pressure at the inlet is in equilibrium. With the use of two springs a stabilizing effect can be achieved. The use of only one spring means that the associated valve element is in a pretension state. This again means that it is necessary to overcome a certain force or pressure before the valve element will move. This is not the case with two springs. When the dynamic valve element is arranged between the two springs and these two springs have the same spring constance then it is always the same pressure which can move the dynamic valve element for a distance, e.g. 1 mm which is not the case with only one spring. This effect again gives a more precise regulation. The same is true when the two springs do not have the same spring constance. In this case, a displacement over pressure changes a bit. If two springs with progressive spring constance are used, this could be used to have the one spring "responsible" for one pressure area and the other spring "responsible" for a second pressure area.

A preferred example of the invention will now be described in more detail with reference to the drawing, wherein:
- fig. 1: is a sectional view through a valve and
- fig. 2: is an enlarged view of detail II of fig. 1.

A valve 1 comprises a housing 2 having an upper part 2a and a lower part 2b. The housing 2 has a first port 3 and a second port 4. In the present case first port 3 serves as inlet and second port 4 serves as outlet.

A valve element 5 cooperating with a valve seat 6 is arranged in a flow path between said first port 3 and said second port 4. The valve element 5 can be moved by means of a stem 7. A dynamic unit 8 is arranged in the flow path upstream the valve seat 6.

The dynamic unit 8 comprises a dynamic valve element 9 which is moveable within housing 2b parallel to a central axis 10 of the valve seat 6. Axis 10 of the valve seat 6 is a center axis and runs perpendicular to valve seat 6. Axis 10 is at the same time the moving axis of the valve element 5.

The dynamic valve element 9 cooperates with a counter element 11. Counter element 11 comprises a wall section having a radially inner surface 12. The distance between said inner surface 12 and said axis 10 is adjustable, as will be described in the following.

The counter element 11 comprises a number of wings 13 which are distributed in circumferential direction around axis 10. Each wing 13 comprises a lower edge 14, i.e. an edge facing away from the valve seat 6. This lower edge 14 is in contact with an inclined surface 15 in lower housing part 2b. Surface 15 is inclined with respect to axis 10 and forms a cone section.

Each wing 13 comprises a part 16 of an outer thread. Basically, this part 16 is a simple protrusion facing radially outwardly. It can be used to form a hinge point.

The housing part 2b comprises an inner thread 17. The part 16 of the outer thread is in engagement of the inner thread 17. When the wings 13 are moved in circumferential direction around axis 10, they are at the same time displaced in a direction parallel to axis 10. The threaded connection between the wings and the housing part 2b form a sort of a gear having a very low transmission ration. When the wings 13 are moved in circumferential direction by 360°, they are displaced parallel to the axis 10 by one or a few millimeters.

When, for example, the wings 13 are displaced away from a valve seat member 18 carrying valve seat 6, the lower edge 14 is forced radially inwardly to decrease the distance between the radially inner surface 12 and axis 10.

In a way not shown, an elastic material is located in circumferential direction between the wings 13. When the wings are displaced away from the valve seat member 18 this material is compressed. When the wings 13 are displaced in a direction towards said valve seat member 18, the elastic material expands and moves the lower edge 14 radially outwardly which is possible since the lower edge 14 in this case moves up the inclined surface 15.

The dynamic valve element 9 comprises a base 19. A wall 20 extends from base 19 in a direction towards valve seat member 18. A plurality of openings 21 in wall 20 is distributed in circumferential direction. Depending on the desired flow characteristic of the dynamic unit 8 the wall 20 could be completely omitted so that there is a ring channel formed between the dynamic valve element 9 and the wings 13.

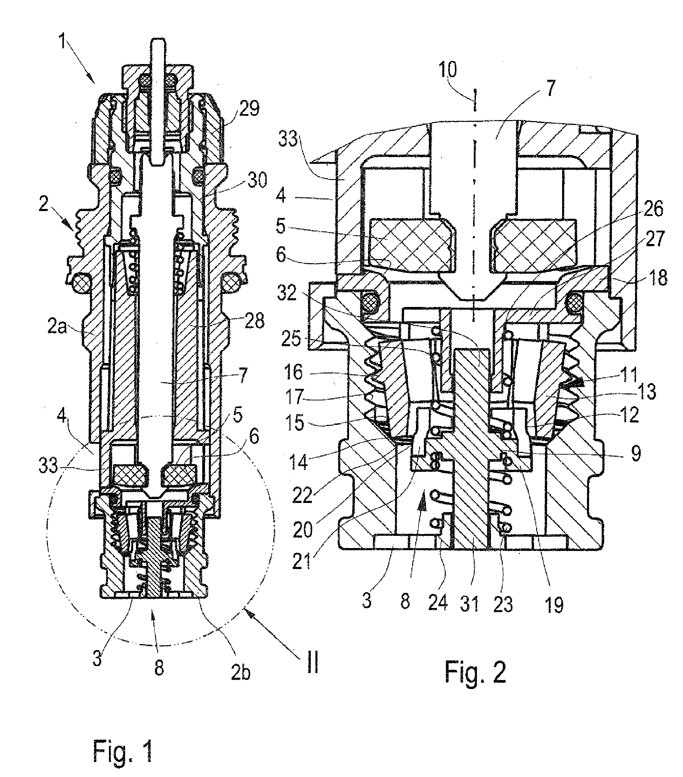

Even in the condition shown in fig. 2 in which the dynamic unit 8 has the smallest throttling resistance, the wall 20 protrudes into a space which is surrounded by the radially inner surface 12. This means that the flow through the dynamic unit 8 can pass through a part of the openings 21 which is not covered by the wings 13. An additional flow path is formed in a gap 22 between the wall 20 and the inner surface 12.

The openings 21 have a width in circumferential direction which varies along axis 10. The openings 21 have the smallest width near the base 19 and the largest widths at the opposite end, i.e. the end facing the valve seat member 18.

The dynamic valve element is loaded by spring means. The spring means comprise a first spring 23 between a first stop 24 in housing part 2b and the dynamic valve element 9. Furthermore, the spring means comprise a second spring 25 between a second stop 26 and the dynamic valve element 9. The second stop 26 is part of the valve seat member 18 and connected to valve seat member 18 by a radially extending arm 27.

Valve seat member 18 is rotatably mounted in the housing 2, more precisely the lower housing part 2b. In a way not shown, valve seat member 18 is coupled to the wings 13 in rotational direction, wherein such a coupling allows a displacement of the wings 13 parallel to axis 10. Valve seat member 18 in turn can be driven from the outside, for example by means of a valve insert 28 connected to a ring 29 on top of valve 1 via a connecting member 30. A connection between the valve insert 28 and the valve seat member 18 is made by element 33.

The dynamic valve element 9 comprises a first stem 31 which is guided in first stop 24 and a second stem 32 which is guided in second stop 26. Dynamic valve element 9 can therefore reliably held centered to axis 10. Both stems 31, 32 have the same sectional area.

A pressure at the first port 3 acts on a pressure area of the dynamic valve element 9 facing the first port 3. This pressure tends to move the dynamic valve element 9 in a direction towards said valve seat member 18. The fluid has to pass between the dynamic valve element 9 and the wings 13. This produces a pressure drop so that the pressure at the valve seat 6 is lower. This lower pressure acts on the dynamic valve element 9 in the opposite direction. Furthermore, the combined forces of the two springs 23, 25 act on the dynamic valve element 9. The dynamic valve element 9 moves into a position in which the pressure drop in the "throttle" between dynamic valve element 9 and wings 13 corresponds to the combined forces of springs 23, 25. This pressure drop becomes larger when the pressure at the first port 3 increases.

This pressure difference can be, however, changed by rotating the wings 13 changing the inner diameter of the inner surface 12. This adjustment can be made with high accuracy, so that the flow can be adjusted with the same high accuracy.

The dynamic unit 8 forms a sort of maximum flow limiter which secures a maximum flow through the valve 1 and this maximum flow is inlet pressure independent. In the dynamic unit 8 the inlet pressure is trying to move the dynamic valve element 9 towards the valve seat member 18 in order to increase the flow resistance between the dynamic valve element 9 and the counter element 11. Against the force of the springs 23, 25 and the pressure working between the dynamic unit 8 and the valve seat 6 is trying to open the dynamic unit, i.e. to decrease the throttling resistance of the dynamic unit. The dynamic unit 8 is fully open when the throttling resistance between the valve element 5 and the valve seat 6 is at a maximum and the pressure working between the dynamic unit 8 and the valve seat 6 is in principle only used for "indicating" when the dynamic unit 8 should start operating.

When the valve element 5 has the largest distance to the valve seat 6 the pressure between the valve seat 6 and the dynamic unit 8 can be regarded as negligible and this starts the dynamic unit 8 and the regulation or flow limitation is now only a "fight" between the inlet pressure and the springs 23, 25.

## Claims

1. Valve (1), in particular heat exchanger valve, comprising a housing (2) having a first port (3), a second port (4), and a flow path between said first port (3) and said second port (4), wherein a valve seat (6) having a central axis (10), a main valve element (5), and a dynamic unit (8) are arranged in said flow path, wherein said dynamic unit (8) comprises a dynamic valve element (9) and a counter element (11), **characterized in that** said counter element (11) comprises an adjustable form.

2. Valve according to claim 1, **characterized in that** said counter element (11) comprises a wall section having a radially inner surface (12), wherein a distance between said inner surface (12) and said axis (10) is adjustable for at least a part of said wall section.

3. Valve according to claim 2, **characterized in that** said wall section comprises a predetermined number of wings (13) distributed in circumferential direction around said axis (10), wherein an inclination of at least one wing (13) relative to said axis (10) is adjustable.

4. Valve according to claim 3, **characterized in that** said wing (13) comprises an edge (14) resting against a part (15) of said housing (2) which is inclined with respect to said axis (10), wherein said wing (13) is displaceable parallel to said axis (10).

5. Valve according to claim 4, **characterized in that** said housing (2) comprises an inner thread (17) and said wing (13) comprises part (16) of an outer thread in engagement with said inner thread (17), wherein said wing (13) is movable in rotational direction around said axis (10).

6. Valve according to any of claims 3 to 5, **characterized in that** an elastic material is located in circumferential direction between wings (13).

7. Valve according to any of claims 3 to 6, **characterized in that** said valve seat (6) is formed at a valve seat member (18), said valve seat member (18) being rotatably mounted in said housing (2) and said wing (13) being rotatably fixed by connected to said valve seat member (18).

8. Valve according to any of claims 2 to 7, **characterized in that** said dynamic valve element (9) comprises a ring shaped wall (20) protruding into said wall section.

9. Valve according to claim 8, **characterized in that** said wall (20) comprises at least one opening (21).

10. Valve according to claim 9, **characterized in that** said opening (21) has a width in circumferential direction varying along said axis (10).

11. Valve according to any of claims 2 to 10, **characterized in that** said dynamic valve element (9) is loaded by spring means (23, 25), said spring means (23, 25) comprising a first spring (23) at one a first side of said dynamic valve element (9) and a second spring (25) at a second side of said dynamic valve element (9) opposite said first side.
